# EUROPEAN PATENT APPLICATION

(11) **EP 4 721 851 A1**
(43) Date of publication of application: **08.04.2026**
(21) Application number: 24204630.8
(22) Date of filing: 04.10.2024
(51) Int. Cl.: B01J 8/00, F16L 23/02, F16L 23/16, F16L 23/18

(54) **CATALYST FEEDING SYSTEM COMPRISING COMPACT FLANGES**

(71) Applicant: Borealis GmbH, 1020 Vienna (AT)
(72) Inventor: ELOVAINIO, Erno Tapio, 06850 Kulloo (FI); ZITTING, Samuli, 06850 Kulloo (FI); ARTNER, Juergen, 2320 Schwechat-Mannswörth (AT)
(74) Representative: Kador & Partner Part mbB

(57) **Abstract**

The present invention relates to a catalyst feeding system for feeding a catalyst slurry to a polymer production plant. The catalyst feeding system comprises components such as a catalyst slurry inlet, a catalyst slurry outlet configured to be connected to a (pre-) polymerization reactor, connecting pipes, and instruments. One or more flanged joints are used to connect these components in fluid communication. The present invention further relates to a polymer production plant comprising the catalyst feeding system, a process for preparing a polymer using the catalyst feeding system and the use of the catalyst feeding system for preparing a polymer.

## Description

### Field of the invention

The present invention relates to a catalyst feeding system for feeding a catalyst slurry to a polymer production plant. The catalyst feeding system comprises components such as a catalyst slurry inlet, a catalyst slurry outlet configured to be connected to a (pre-) polymerization reactor, connecting pipes, and instruments. One or more flanged joints are used to connect these components in fluid communication. The present invention further relates to a polymer production plant comprising the catalyst feeding system, a process for preparing a polymer using the catalyst feeding system and the use of the catalyst feeding system for preparing a polymer.

### Background of the invention

The Borstar PE/PP process is a technology for manufacturing polyethylene (PE) and polypropylene (PP) which uses catalyst feeding lines typically built by connecting the components of the system, such as connecting pipes and instruments by conventional flanges.

For example, patent application WO 2022/111966 discloses a process for feeding a polymerization catalyst into a polymerization reactor and the catalyst feeding system.

In the catalyst feeding lines for the Borstar PE/PP process, the flow velocity is reasonably slow which is beneficial for the product quality. A low flow, however, may lead to settling of the catalyst particles typically fed in a carrier fluid/oil. The flow velocity can be increased by diluting the slurry, but this is not desirable from the product quality point of view.

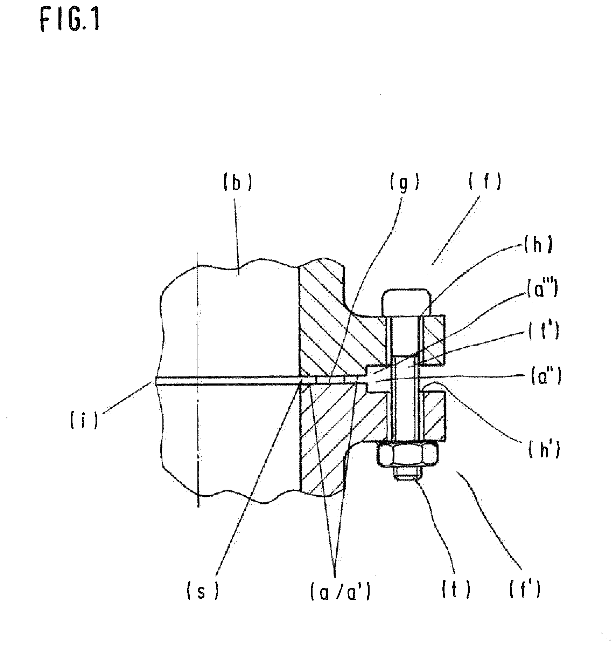

Standard flange connections have a small annular cavity formed between the two faces of the flanges (Figure 1). The small cavity can cause flow disturbances due to the irregularities on the surface of the bore. Furthermore, catalyst particles can settle in the cavity, leading to the occurrence of undesired polymerisation, for example, if monomers contaminate the flow. Accumulated, polymerized material may get loose from the cavity and plug the catalyst feeding line during later campaigns. The plugging of the line can, in turn, leads to a process upset or plant stop.

Furthermore, the contamination of the catalyst due to undesired polymerisation in the feeding lines can lead to off-specification (off-spec) production. For example, if a contaminated different catalyst is present during polymerization of a polymer that is used for film applications, the quality of the films made using the produced polymers is affected:
- during the film production, because a contaminated catalyst produces different products which can be seen as a gels in the film thereby deteriorating film quality,
- if gel count exceeds the given limits (gel area/film area, specified), the product will be downgraded leading to economic losses.

There is therefore the need to provide a catalyst feeding system that is not affected by the above-mentioned problems.

The present inventors have surprisingly found that the above problems are solved when in a catalyst feeding system the components in fluid communication are joined by flanged joints formed by connected flanges, wherein, in at least one of the flanges joints, the faces of the connected flanges are in direct contact with each other at least at the inner annular edge of the flanges so that the bores are fully flush.

Therefore, for example, an optimal flow velocity of the catalyst slurry can be maintained while avoiding catalyst or polymer settling in the flanged joints. Further if the polymer is used for producing films, the quality of the film is not affected.

### Summary of the invention

In a first aspect, the disclosure provides a catalyst feeding system for feeding a catalyst slurry to a polymer production plant, the catalyst feeding system comprising
a catalyst slurry inlet,
a catalyst slurry outlet configured to be connected to a (pre-) polymerization reactor,
one or more components selecting from connecting pipes and instruments,
one or more flanged joints arranged to connect two or more of the catalyst slurry inlet, the catalyst slurry outlet and the one or more component(s) thereby providing fluid communication therebetween,
wherein each of the one or more flanged joints contain a pair of connected flanges, each flange having a face with an inner annular edge encircling a bore; and
wherein in at least one of the flanged joints the faces of the connected flanges are in direct contact with each other at least at the inner annular edges of the flanges thereby providing fully flushed bores when the catalyst system under operation is fed with a catalyst slurry.

In a second aspect, the disclosure provides a polymer production plant comprising the catalyst feeding system of the first aspect and of any of the embodiments of the first aspect disclosed herein.

In a third aspect, the disclosure provides a process for producing polymers comprising feeding a catalyst slurry by use of the catalyst feeding system according the first aspect and of any of the embodiments of the first aspect disclosed herein is used.

In a fourth aspect, the disclosure provides the use of one or more flanged joints to connect components in the catalyst feeding system of a polymer production plant, wherein the system comprise a catalyst slurry inlet, a catalyst slurry outlet configured to be connected to a (pre-) polymerization reactor, connecting pipes and instruments,
and wherein one or more flanged joints are arranged to connect two or more of the catalyst slurry inlet, the catalyst slurry outlet and the one or more component(s) thereby providing fluid communication therebetween,
wherein each of the one or more flanged joints contain a pair of connected flanges, each flange having a face with an inner annular edge encircling a bore; and
wherein in at least one of the flanged joints the faces of the connected flanges are in direct contact with each other at least at the inner annular edges of the flanges thereby providing fully flushed bores when the catalyst system under operation is fed with a catalyst slurry.

### Detailed Description of the invention

The present disclosure provides a catalyst feeding system for feeding a catalyst slurry to a polymer production plant, the catalyst feeding system comprising a catalyst slurry inlet, a catalyst slurry outlet configured to be connected to a (pre-) polymerization reactor,
one or more component(s) selected from connecting pipes and instruments; and
one or more flanged joints arranged to connect two or more of the catalyst slurry inlet, the catalyst slurry outlet and the one or more component(s) thereby providing fluid communication therebetween,
wherein each of the one or more flanged joints contain a pair of connected flanges, each flange having a face with an inner annular edge encircling a bore; and
wherein in at least one of the flanged joints the faces of the connected flanges are in direct contact with each other at least at the inner annular edges of the flanges thereby providing fully flushed bores when the catalyst system under operation is fed with a catalyst slurry.

The flanged joints are generally formed by tightly bolting together the faces of two adjacent flanges. The face of a flange is the surface that is to contact the corresponding face of a second flange. Generally, the face is a flat surface and is perpendicular to the bore of the flange. Each flange has a face with an inner annular edge encircling a bore The face may comprise an annular groove, typically for hosting a gasket. A face comprising an annular groove has therefore a first inner surface that extends from the inner annular edge of the face to the inner annular edge of the groove and a second outer surface that extends from the outer annular edge of the groove to the outer annular edge of the face. The first and the second surfaces, preferably lay on the same plane (coplanar). The outer part of the flange faces contains holes for hosting the bolts.

In the catalyst feeding system of the invention, at least one of the flanged joints the faces of the connected flanges are in direct contact with each other at least at the inner annular edge of the flanges thereby providing fully flushed bores when the catalyst system under operation is fed with a catalyst slurry. Therefore, the faces have at least a direct contact at the internal bores of the flanges so that no cavity, protrusion or discontinuity is formed between the faces of the two connected flanges at the inner annular edges. Because of this configuration, the bores are fully flush, meaning that there is a continuous smooth surface. In the following these flanged joints are also designated as "fully flush joints".

Because of the arrangement of the invention, the advantage is achieved that, the catalyst particles cannot accumulate or settle at the flanged joints.

Accordingly, the whole polymerization process is clean and an optimal - even slow - velocity of the catalyst slurry can be maintained. Thus, undesired dilutions of the catalyst slurry can be avoided. Furthermore, the maintenance (cleaning) of the catalytic feeding system is simplified and undesired plant stops can be avoided.

It is preferred that the faces of the connected flanges in the fully flush joints directly contact each other throughout the whole surface of the faces. The term "whole surface" means the surface or surfaces of the face that extends from the inner annular edge to the outer annular edge of the face. As disclosed above, if the face comprises an annular groove, the whole surface of the face comprises a first surface and a second surface. The expression "the faces of the connected flanges directly contact each other throughout the whole surface of the faces" means, in this case, that the first and the second surfaces of the face of a first flange directly contact the first and the second surfaces of the face of a second flange, respectively.

As the faces of the joined flanges in this embodiment are very tightly connected together, the connected flanges form a so called "static connection".

"Static connection" means that no relative movement between the two faces is observed when the flanges are connected. Preferably, the static connection is maintained even when the flanges undergo extreme dynamic or static loads and high pressure flow. The flange's static behavior under any design load condition ensures that neither dynamic, nor static loading, will degrade the seal performance or other characteristics within the capacity of the corresponding pipe. As further advantages, the loosening of the bolt, bolt bending, a nonuniform bolt load and bolt re-tightening are avoided.

Moreover, due to the static connection, the "fully flush" characteristic of the bore and the advantages accordingly provided are maintained over time.

Compact flange is a term used in the art for flanges that are compact in size and are useful for small diameter pipelines. Some types of compact flanges form flanged joints wherein the faces of the connected compact flanges are in direct contact with each other at least at the inner annular edge of the flanges so that the bores are fully flush. Moreover, some type of compact flanges having a fully flush bore additionally have faces that directly contact each other throughout the whole surface of the faces and therefore provide a static connection.

### Catalyst feeding system

Generally, a catalyst feeding system comprises a catalyst slurry inlet, a catalyst slurry outlets configured to be connected with a (pre) polymerization reactor, one or more components selected from connecting pipes and instruments (such as valves or pumps) in fluid communication. In general, a catalyst feeding system comprises tanks. Tanks can be for example, catalyst preparation tank, catalyst feed tank, pre- and polymerization reactors. In general, a catalyst feeding system comprises flush lines.

With regard to the connecting pipes, there is no limitation as to the type of pipe in the catalyst feeding system. The pipes serve, for example, to transfer the catalyst slurry from a tank to another tank or from a tank to an instrument or from an instrument to a tank. The pipe can be, for example, a catalyst transfer line, for example, to transfer the catalyst slurry from a catalyst preparation tank to the catalyst feed tank. The pipe can be, for example, a catalyst feed line, for example, to transfer the catalyst slurry from the catalyst feed tank to the pump or from the pump to the polymerization reactor.

With regard to the instruments, there is no limitation as to the type of instruments in the catalyst feeding system. Typical instruments used in a catalyst feeding system are valves, pumps, such as catalyst slurry pumps, manometers etc. As is known, flanges are not directly attached to instruments. A connecting element such as a short portion of a pipe is usually present to connect the instrument to the flange. In the context of the invention the term "instrument" such as "valve" or "pump" includes said connecting elements.

In the catalyst feeding system of the invention one or more flanged joints are used to connect these elements wherein in at least one of the flanged joints the faces of the connected flanges are in direct contact with each other at least at the inner annular edges of the flanges thereby providing fully flushed bores.

Preferably, in the catalyst feeding system, all of the flanged joints for connecting pipes have the faces of the connected flanges in direct contact with each other at least at the inner annular edges of the flanges thereby providing fully flushed bores. Accordingly, the above mentioned advantages due to fully flush bores are achieved for all the pipe connections of the catalyst feeding system.

More preferably, the faces of the connected flanges of all the fully flush joints directly contact each other throughout the whole surface of the faces so that there is a static connection between the pair of flanges forming the joints. Accordingly, the above-mentioned advantages due to the static connection are achieved for all the pipe connections of the catalyst feeding system.

According to an embodiment of the invention, the catalyst transfer line is connected to the inlet of the catalyst feed tank by means of connected flanges that form flanged joints wherein the faces of the connected flanges are in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

According to an embodiment of the invention, the outlet of the catalyst feed tank is connected to the catalyst feed line by means of connected flanges that form flanged joints wherein the faces of the connected flanges are in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

According to an embodiment of the invention, the catalyst feed line of the catalyst feeding system is connected to the instrument such as a pump by means of connected flanges that form flanged joints wherein the faces of the connected flanges are in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

The instrument may have an inlet or an outlet or both, the catalyst feed line of catalyst feeding system may be connected to the inlet and the outlet by means of connected flanges that form flanged joints and wherein the faces of the connected flanges are in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

According to an embodiment of the invention, the (reactor) catalyst feed line is connected to the inlet of the polymerization reactor or of the (pre-) polymerization reactor by means of connected flanges that form flanged joints wherein the faces of the connected flanges are in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

The catalyst feeding system of the invention further comprises instruments selected from valves, for examples inlet and outlet valves. Preferably, in the catalyst feeding system all of the flanged joints for connecting a valve through which the catalyst slurry flows to any other component of the catalyst feeding system have the faces of the connected flanges in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

The catalyst feeding system comprises instruments selected from pumps and/or manometers. Preferably, in the catalyst feeding system all of the flanged joints for connecting an instrument through which the catalyst slurry flows to any of the other component of the catalyst feeding system have the faces of the connected flanges in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

Even more preferably, in the catalyst feeding system, all of the flanged joints for connecting pipe (through which the catalyst slurry flows) all of the flanged joints for connecting instruments through which the catalyst slurry flows to any other component of the catalyst feeding system have the faces in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

### Flush line pipe

The catalyst feeding system, preferably, further comprises at least one flush line pipe. Flush line pipes serve the purpose of flushing the connecting pipes of the catalyst feeding system. Therefore, they are useful for emptying the connecting pipes from the catalyst particles and other byproducts.

The flush line pipes are generally connected to a further component of the catalyst feeding system. Preferably, the component is a connecting pipe, wherein more preferably the connecting line is a catalyst transfer line or a catalyst feed line. Preferably, the flush line pipe has an inlet and outlet connected to the connecting line, the inlet being upstream and the outlet being downstream the connecting pipeline to which the flush line is connected. It is also contemplated that the inlet is downstream and the outlet is upstream so that flushing medium flows in the opposite direction with respect to the direction of the flow of the catalyst slurry. Preferably, the inlet and the outlet each comprises a valve. Preferably, the flush line pipe is connected, preferably via an inlet comprising a valve and an outlet comprising a valve, to the connecting pipe by flanged joints formed by connected flanges having faces in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

Preferably, the inlet of a flush line pipe, wherein preferably the inlet comprises a valve, is connected to the catalyst transfer line. More preferably, the inlet of a flush line pipe is connected to the catalyst transfer line in proximity to the catalyst slurry inlet, wherein preferably the catalyst slurry inlet comprises a valve. More preferably, the inlet of the flush line pipe is connected to the catalyst transfer line just in proximity of the catalyst slurry inlet by means of connected flanges that form flanged joints wherein the faces of the connected flanges having faces in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

Preferably, the outlet of said flush line pipe is connected to the catalyst transfer line. Preferably, the outlet of said flush line pipe is connected to the catalyst transfer line in proximity of the inlet of the catalyst feed tank. Preferably, the outlet of said flush line pipe and the inlet of the catalyst feed tank comprise a valve. Preferably, the outlet of said flush line pipe is connected to the catalyst transfer line by means of connected flanges that form flanged joints wherein the faces of the connected flanges are in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

Preferably, the inlet of a flush line pipe is connected to the catalyst feed line. Preferably, the inlet of a flush line pipe is connected to the catalyst feed line in proximity to the outlet of the catalyst feeding tank. Preferably, the inlet of said flush line pipe and the outlet of the catalyst feed tank comprise a valve. More preferably, the inlet of the flush line pipe is connected to the catalyst feed line in proximity to the outlet of the catalyst feeding tank by means of connected flanges that form flanged joints wherein the faces of the connected flanges are in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

Preferably, the outlet of flush line pipe is connected to the catalyst feed line. Preferably, the outlet of flush line pipe is connected to the catalyst feed line in proximity to the inlet of the pump. Preferably, the outlet of said flush line pipe comprises a valve. More preferably, the outlet of the flush line pipe is connected to the catalyst feed line in proximity to the inlet of the pump by means of connected flanges that form flanged joints wherein the faces of the connected flanges are in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

Preferably, the inlet of a flush line pipe is connected to the (reactor) catalyst feed line for feeding the polymerization reactor or the (pre-) polymerization reactor. Preferably, the inlet of the flush line pipe is connected to the (reactor) catalyst feed line for feeding the polymerization reactor in proximity of the outlet of the pump. Preferably, the inlet of said flush line pipe comprises a valve. More preferably, the inlet of a flush line pipe is connected to the catalyst feed line for feeding the polymerization reactor in proximity of the outlet of the pump by means of connected flanges that form flanged joints wherein the faces of the connected flanges are in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

Preferably, the outlet of said flush line pipe is connected to the catalyst feed line for feeding the polymerization reactor. Preferably, the outlet of said flush line pipe is connected to the catalyst feed line for feeding the polymerization reactor in proximity of the inlet of the polymerization reactor. Preferably, the outlet of said flush line pipe comprises a valve. More preferably, the outlet of said flush line pipe is connected to the catalyst feed line for feeding the polymerization reactor in proximity of the inlet of the polymerization reactor by means of connected flanges that form flanged joints wherein the faces of the connected flanges are in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

According to the above description, the flush medium flows in the same direction of the catalyst slurry. However, in the feeding system of the invention the flush medium flow can also flow in the opposite direction. The above inlet of the flush line is then the outlet and the above outlet is the inlet.

Any flush medium for the purpose of flushing the connection line can be used to flush the catalyst feeding line. Preferably, the flush medium is made with the same medium of the catalyst slurry. Therefore, the flush medium comprises or consist, for example of oil or wax.

### Tanks

As disclosed above, in general, catalyst feeding system comprises tanks. Tanks can be for example, catalyst preparation tank, catalyst feed tank, pre- and polymerization reactors. Preferably, the catalyst feeding system of the invention comprises at least a catalyst feed tank. More preferably, the catalyst feeding system of the invention comprises at least a catalyst preparation tank and a catalyst feed tank.

The catalyst preparation and the catalyst feeding may be made in different tanks. This allows the preparation of the catalyst-oil slurry in the polyolefin plant from a dry catalyst powder as the catalyst preparation tank can be placed anywhere in the plant where the dry catalyst powder can easily be fed. For example, the preparation tank may be located at a point, which is close to the ground as this simplifies feeding of the components. This generates savings in the catalyst transportation costs and reduces the time of feeding the catalyst powder to the system.

Further the use of a preparation tank allows to place the feeding tanks quite close to the polymerization reactor. The catalyst feeding tank is, for example, used to maintain the catalyst slurry in a homogeneous state. The catalyst feed tank(s) can be located as close as possible to the injection point of the polymerization reactor. By placing the catalyst feed tank(s) above the polymerization reactor, gravitational force supports the transport of the catalyst slurry to the polymerization reactor.

Preferably, the catalyst feed tank(s) is located at a position above the injection point of the polymerization reactor. Preferably, the catalyst feed tank(s) is located vertically above or diagonally above the polymerization reactor. Advantageously, the substantial vertical path downwards from the catalyst feed tank to the (pre) reactor or reactor further helps avoiding catalyst settling.

The catalyst feeding tank(s) comprises a feeding tank inlet and a feeding tank outlet. Preferably, the feeding tank inlet and a feeding tank outlet each comprises a valve. Preferably, at least the feeding tank inlet or the feeding tank outlet are connected to connecting pipes of the catalyst feeding system by flanged joints formed by connected flanges having faces that are in direct contact with each other at least at the inner annular edge of the flanges thereby providing fully flushed bores. More preferably, both the feeding tank inlet and the feeding tank outlet are connected to connecting pipes of the system by a flanged joint in which the faces of the connected flanges are in direct contact with each other at least at the inner annular edge of the flanges thereby providing fully flushed bores , i.e., forming fully flush joints.

More preferably, in these fully flush joints the faces of the connected flanges directly contact each other throughout the whole surface of the faces so that there is a static connection between the pair of flanges forming the joints.

Preferably, the catalyst feeding system comprises the catalyst feeding tank and at least two flush lines, wherein one flush line is upstream and one is downstream the catalyst feeding tank. The at least two flush lines are preferably connected to connecting pipes of the system by flanged joints in which the faces of the connected flanges are in direct contact with each other at least at the inner annular edge of the flanges thereby providing fully flushed bores, i.e., forming fully flush joints. The connecting pipes are preferably connected to the catalyst feeding tank inlet and/our outlet by flanged joints in which the faces of the connected flanges are in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

The pressure within the catalyst feed tank(s) is not critical. It can be selected within the operating range of the process equipment. Especially, it should be selected so that the pumps can be operated without problems. It is desired that the pressure in the catalyst feed tank(s) is higher than the atmospheric pressure to minimize possible leaks of air and/or moisture into the catalyst feed tank(s).

When the catalytic feeding system is for the preparation of polymers, preferably polyolefins, the catalyst feed tank(s) is preferably maintained in inert atmosphere. More preferably, the presence of oxygen and moisture should be avoided. Therefore, all the connections to the feed tank(s), such as pipe joints and agitator shaft bearings need to be carefully designed to eliminate the leaks from the inert atmosphere.

Advantageously, the flanged joints of the invention avoid leaks of the inert atmosphere and the contamination with the air. Therefore, the catalytic feeding system of the invention is advantageous for those processes that require the catalyst slurry to be maintained in an inert atmosphere.

The inert atmosphere (gas phase) in the catalyst feed tank(s) preferably comprises, more preferably consists of nitrogen, argon and similar inert gases, or their mixtures. Also, the catalyst feed tank(s) should be equipped with possibility to flush the tank(s) with inert gas, preferably with nitrogen.

The catalyst feeding system may further comprise a catalyst slurry pump. The catalyst slurry pump is used to transfer the catalyst slurry from the catalyst feed tank to the polymerization rector or if present to the (pre-) polymerization reactor. The pump is located along the line connecting the catalyst feed tank and the polymerization reactor dividing the connection line in the catalyst feed line and the (reactor) catalyst feed line. The catalyst slurry pump can be for example a valveless piston pump. A valveless piston valve is for example ideal for catalyst slurry at high viscosity. In the catalyst feeding system, the catalyst slurry pump comprises a slurry pump inlet and a slurry pump outlet. Preferably a slurry pump inlet and a slurry pump outlet each comprises a valve. Preferably, at least one of a slurry pump inlet and a slurry pump outlet is connected to connecting pipes of the system by a flanged joint in which the faces of the connected flanges are in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

More preferably, both the slurry pump inlet and the slurry pump outlet are connected to connecting pipes of the system by a flanged joint in which the faces of the connected flanges are in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

The catalyst feeding system may preferably comprise at least two flush lines, wherein one is present upstream and one downstream of the slurry pump. Preferably, the at least two flush lines are connected to the connecting pipes by means of flanged joints in which the faces of the connected flanges are in direct contact with each other at least at the inner annular edge of the flanges thereby providing fully flushed bores. In this preferred embodiment, the upstream flush line is connected to the catalyst feed line by a flanged joint in which the faces of the connected flanges are in direct contact with each other at least at the inner annular edge of the flanges so that the bores are fully flush. In this preferred embodiment, the downstream flush line is connected to the catalyst reactor feed line by a flanged joint in which the faces of the connected flanges are direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

In the catalytic feeding system of the invention, the above embodiments may be combined. Any combination is contemplated according to the invention. In a most preferred embodiment of the invention, all the above embodiments are combined.

Accordingly, preferably all the components of the catalytic feeding system that are connectable by flanges joints are connected by flanged joints formed by connected flanges having faces in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

### Reactors

The catalyst feeding system is configured to be connected to a (pre)-polymerization reactor or a polymerization reactor. If the polymerization is conducted as a slurry polymerization, any suitable reactor type known in the art may be used. A continuous stirred tank reactor and a loop reactor are suitable examples of useful reactor types. Especially, a loop reactor is preferred because of its flexibility.

The slurry polymerization may be conducted in normal liquid slurry conditions or alternatively as supercritical slurry polymerization (i.e., when the temperature and the pressure within the reactor exceed the critical temperature and pressure of the fluid mixture within the reactor). Description of liquid slurry polymerization is given, among others, in EP 249689 and US 3262922 and supercritical slurry polymerization in WO 92/12181 and US 3294772.

The reactor comprises an inlet. Preferably, the inlet comprises a valve. Preferably, the inlet is connected to connecting pipes of the system by flanged joints formed by connected flanges having faces that are in direct contact with each other at least at the inner annular edge of the flanges thereby providing fully flushed bores, i.e., forming fully flush joints.

More preferably, in these fully flush joints the faces of the connected flanges directly contact each other throughout the whole surface of the faces so that there is a static connection between the pair of flanges forming the joints.

Preferably, the catalyst feeding system comprises at least a flush line outlet which is just in proximity to the inlet of the reactor or of the (pre-) polymerization reactor and is connected to connecting pipe by a flanged joint formed by connected flanges having faces that are in direct contact with each other at least at the inner annular edge of the flanges thereby providing fully flushed bores, i.e., forming fully flush joints..

More preferably, in these fully flush joints the faces of the connected flanges directly contact each other throughout the whole surface of the faces so that there is a static connection between the pair of flanges forming the joints.

### Polymer production plant and process for producing polymers

In a further aspect, the disclosure provides a polymer production plant comprising a catalyst feeding system as disclosed in any of the embodiments of the present description.

In a further aspect, the disclosure provides a process for producing polymers in a polymer producing plant comprising feeding a catalyst slurry by use of the catalyst feeding system of the invention. The plant comprises a catalyst feeding system according to the invention as disclosed in any of the embodiments in the present description.

The process according to the invention is any process wherein the polymer is prepared with the help of a catalyst, preferably a catalyst slurry, more preferably a catalyst slurry wherein the carrier is an oil.

Therefore, the catalyst feeding system of the invention is used for the preparation of any polymer prepared in the presence of catalyst, wherein preferably the catalyst is a catalyst slurry. Preferably, the present catalyst feeding system is for a catalyst slurry for the preparation of a polyolefin, wherein the polyolefin is preferably polyethylene, polypropylene or combination thereof.

The catalyst slurry is prepared by mixing the catalyst, preferably a solid catalyst and a carrier, wherein preferably the carrier is an oil or a wax. The concentration of the catalyst in the slurry is preferably between 10 to 40 wt.%, more preferably between 15 and 30 wt.%, even more preferably between 20 and 25 wt.% based on the total amount of slurry.

The oil to be used must be inert towards the catalyst. This means that it must not contain components having tendency to react with the catalyst, such as groups containing atoms selected from oxygen, sulphur, nitrogen, chlorine, fluorine, bromine, iodine and so on. Also, groups containing double bonds or triple bonds should be avoided. Especially the presence of compounds like water, alcohols, organic sulphides, ketones, carbon monoxide, carbon dioxide and acetylenic compounds should be avoided.

The oil is preferably white oil, more preferably food approved white oil or mixtures of food approved white oils. The white oil may be white mineral oil. White mineral oil is a special mineral oil obtained by deep refining to remove impurities such as aromatic hydrocarbons, sulphur and nitrogen. It is generally composed of alkanes and naphthenes with a molecular weight of 250-400 g/mol, and belongs to the lubricating oil fraction. It is colourless, odourless, chemically inert and excellent in light and heat stability.

White mineral oil (i.e., white mineral oil, white oil) is often used as a diluent for the catalyst, particularly as a diluent for the polyolefin polymerization catalyst. The food approved white oil may be food grade white oil. Food grade white oil is a special mineral oil product obtained by further refining and deducting aromatic hydrocarbons from ordinary white oil products. It has excellent photothermal stability, yellowing resistance, oxidation resistance and viscosity temperature performance, and is suitable for human body, safe and non-toxic. Examples of suitable food approved white oil are Clarion^{®} Food Grade White Mineral Oil 70, Phillips 66^{®} White Oil, FOODGUARD USP White Oil 15.

### Use of one or more flanged joints

In a further aspect the disclosure provides the use of one or more flanged joints to connect the components in the catalyst feeding system of a polymer production plant according to any embodiment of the invention as provided by the disclosure.

In a further aspect the disclosure provides the use of one or more flanged joints to connect the components in the catalyst feeding system of a polymer production plant according to any embodiment of the invention as provided by the disclosure, wherein the system components comprise a catalyst slurry inlet, a catalyst slurry outlet configured to be connected to a (pre-) polymerization reactor, one or more component(s) selected from connecting pipesand instruments, and wherein in at least one of the flanged joints the faces of the connected flanges are in direct contact with each other at least at the inner annular edge of the flanges thereby providing fully flushed bores when the catalyst system under operation is fed with a catalyst slurry.

### Figures

Figure 1 is a cross sectional view of conventional connected flanges.
Figure 2a is a cross sectional view of two exemplary connected compact flanges having a bore that is fully flush,
Figure 2b is a cross sectional view of two exemplary connected compact flanges having a bore that is fully flush and comprising a gasket,
Figure 3 shows a scheme of an exemplary catalyst feeding system according to the invention.
Figure 4 shows a scheme of a further exemplary catalyst feeding system according to the invention.
Figure 5 shows a scheme of a further exemplary catalyst feeding system according to the invention.

### Examples

### Example 1: conventional flanges

Connected conventional flanges are schematically shown in Figure 1. The two flanges (f) and (f') include two faces (a) and (a'). The two faces (a) and (a') are raised due to the gasket (g) that is interposed between the two faces (a) and (a'). Therefore, the two faces (a) and (a') do not contact each other even when the two flanges (f) and (f') are bolted together. An interruption (i) of the bore (t) at the junction of the flanges (f) and (f') is formed. The faces (a') and (a') form a valley/depression that define respectively facing zone (a") and (a‴) that contain the holes (h) and (h') hosting the bolt (t). A space (s) is formed between the respectively facing zones (a") and (a‴). The part of the bolt (t') between the two facing zones (a") and (a‴) is not hosted in the holes (h) and (h').

The catalyst particles accumulate at the interruption (i).

### Example 2 Fully flush bore flanges

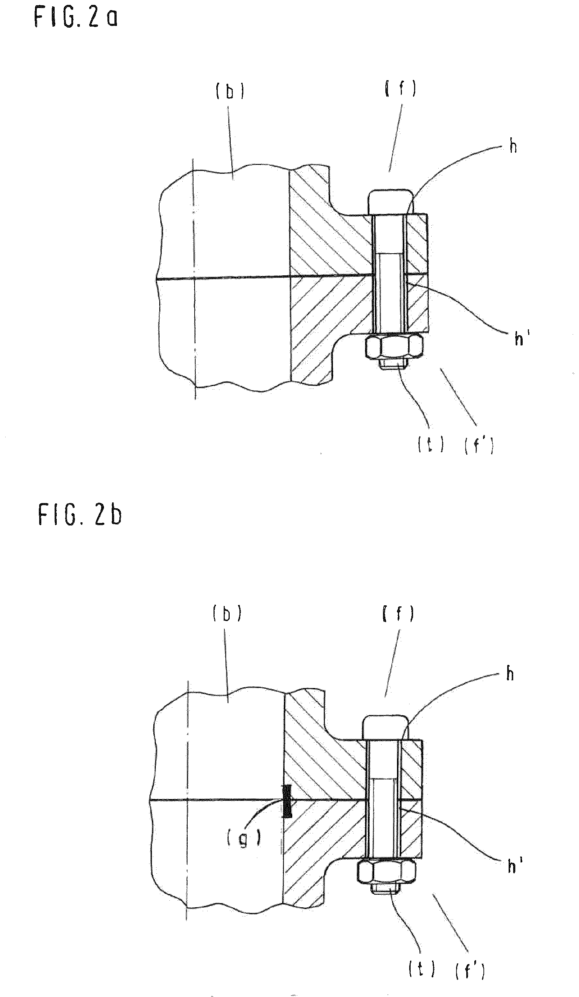

Figure 2a an example of connected compact flanges (f) and (f') having a bore (b) that is fully flush. The two flanges (f) and (f') include two faces (a) and (a') that are in full contact. The bolt (t) is wholly hosted in the holes (h) and (h'). Figure 2b shows a variation of Figure 2a wherein a gasket (g) is present.

### Example 3: Catalytic feeding system

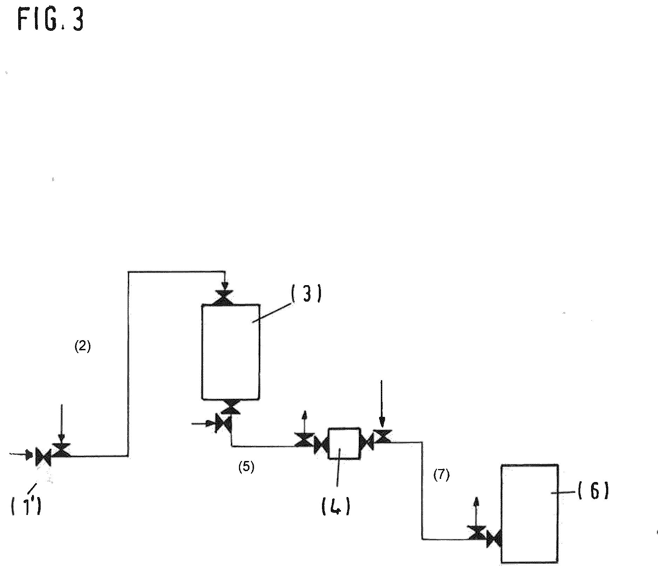

Figure 3 shows an example of catalyst feeding system according to the invention. The system includes a catalyst preparation tank (1) (not shown in Figure 3), a catalyst slurry inlet (1'), a catalyst feed tank (3), a catalyst feed pump (4) and a polymerization reactor (6). The catalyst preparation tank (1) can be located on ground level for easy access. In the catalyst preparation tank (1) the catalyst slurry is formed and then said catalyst slurry is transferred to the catalyst feed tank (3) via a catalyst transfer line (2) The transport from the catalyst preparation tank to the catalyst feed tank can be done batchwise or in continuous. In Figure 3, the catalyst feed tank (3) is located at a level which is above the level of the catalyst preparation tank (1). Thereby the transfer of the catalyst slurry from the catalyst preparation tanks (1) to the catalyst feed tank (3) occurs substantially upwards. The catalyst slurry is maintained in a homogeneous state in the catalyst feed tank (3). The catalyst slurry is withdrawn from the bottom of the operating catalyst feed tank (3) and reach a pump (4), via the feed line (5). The withdrawn portion of the catalyst slurry is transferred by using for example the pump (4) to the catalyst reactor feed line (7) to the polymerization reactor (6). The catalyst feed tank (3) is preferably located above the polymerization reactor (6).

Figure 3 is a non-limiting examples of a catalyst feeding system of the invention and the polymerization reactor (6). The flanged joints are depicted with the symbol of a black bowtiethe flanged joints are located at the catalyst slurry inlet (1'), at the catalyst filling line both at the catalyst slurry inlet and at the inlet of the catalyst feed tank (3), at the outlet of the catalyst feed tank, at the line flush connection, at the line flush outlet, at the catalyst feed pump (4) inlet, at the catalyst feed pump (4) outlet, at the line flush connection, at the line flush outlet, at the reactor inlet.

### Example 4: Catalytic feeding system

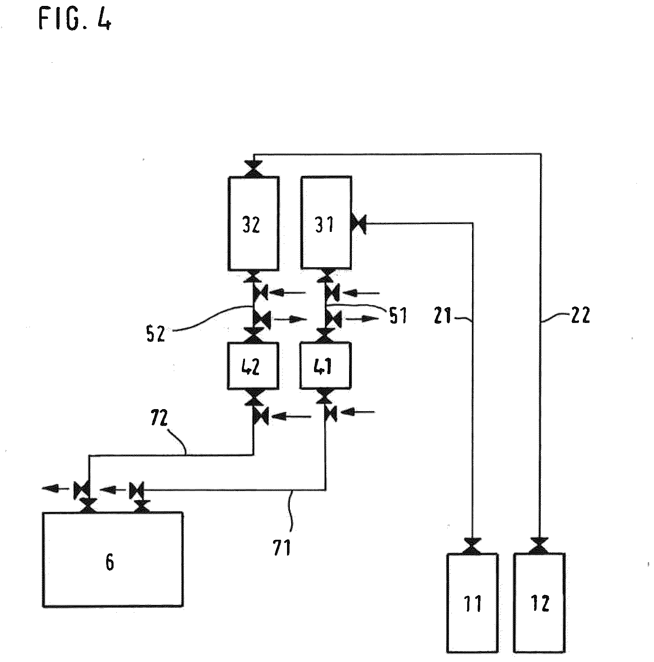

Another exemplary embodiment of the catalyst feeding system of the invention, is shown in Figure 4. The catalyst feeding system include two catalyst preparation tanks (11,12), two catalyst feed tanks (31,32), two catalyst feed pumps (41,42) and a polymerization reactor (6). The catalyst slurry of the first catalyst preparation tank (11) is transferred to the first catalyst feed tank (31) via a first catalyst transfer line (21) and the catalyst slurry of the second catalyst preparation tanks (12) is transferred to the second catalyst feed tanks (32) via a second catalyst transfer line (22). Preferably the catalyst feed tanks (31,32) are located at a level which is above the level of the polymerization reactor (6). The withdrawn portions of the catalyst slurry from the catalyst feed tanks (31,32) are transferred via the two feed lines (51,52) to for example two valveless piston pumps (41,42) and then transferred via the two reactor feed lines (71,72) to the polymerization reactor (6).

In the catalyst feeding system of Figure 4, the flanged joints are depicted with the symbol of a black bowtie the flanged joints are located at the catalyst slurry inlet (s), at the catalyst filling lines both at the catalyst slurry inlets and at the inlets of the catalyst feed tanks, at the outlets of the catalyst feed tanks, at the line flush connections (between the catalyst feed tanks and the pumps), at the line flush outlets, at the catalyst feed pump inlets, at the catalyst feed pump outlets, at the line flush connections (after the catalyst feed pump outlets), at the line flush outlets, at the reactor inlets.

### Example 5: Catalytic feeding system

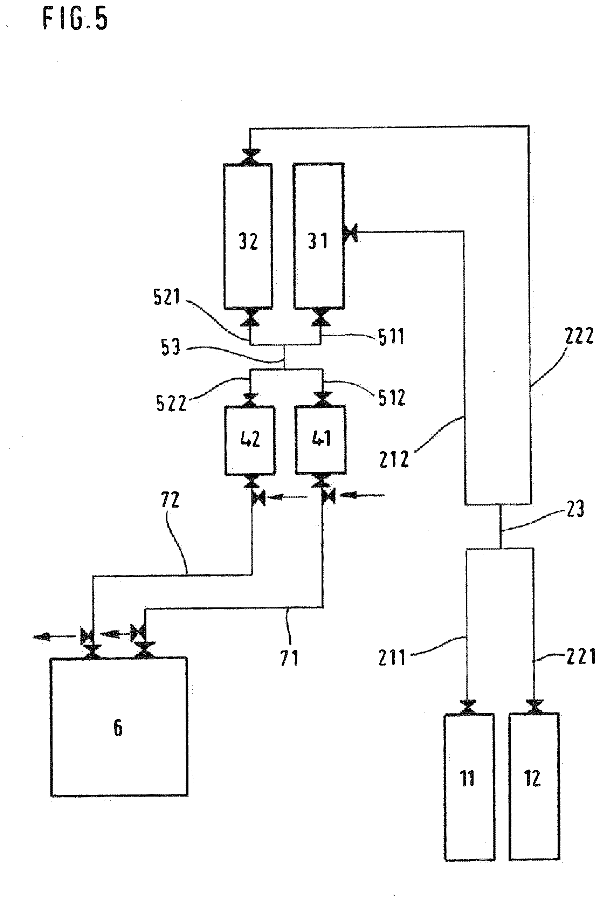

Figure 5 shows another embodiment of the inventive process. Figure 5 shows a flow sheet which is similar to the system shown in Fig. 4. However, in the system shown in Fig. 5 the first and second catalyst transfer lines (211, 212 & 221,222) connecting the first and the second catalyst preparation tank (11,12) and the first and second catalyst feed tank (31,32) cross each other. The first and second feed lines (511,512 & 521,522) from the first and second catalyst feed tanks (31,32) to the valveless piston pumps (41,42) are also crossing each other.

The catalyst slurry of the first catalyst preparation tank (11) is transferred to the first catalyst feed tank (31) via a first catalyst transfer line (211,212), thereby passing a first switching system (23), which is located between the first part of the first transfer line (211) and the second part of the first transfer line (212). The switching system (23) comprises two or more valves and can be set so that the catalyst slurry is transferred via the second part of the first catalyst transfer line (212) to the first catalyst feed tank (31) or via the second part of the second catalyst transfer line (222) to the second catalyst feed tank (32). The catalyst slurry of the second catalyst preparation tank (12) is transferred to the first catalyst feed tank (32) via the first part of the first catalyst transfer line (221) thereby passing the first switching system (23). The first switching system (23) can be set so that the catalyst slurry is transferred via the second part of the second catalyst transfer line (222) to the second catalyst feed tank (32) or via the second part of the first catalyst transfer line (212) to the first catalyst feed tank (31).

The withdrawn portions of the catalyst slurry from the catalyst feed tanks (31,32) are transferred via the first and second feed lines (511,512 & 521,522) and a second switching system (53) to the valveless piston pumps (41,42) and then transferred via the two reactor feed lines (71,72) to the polymerization reactor (6). The withdrawn portion from the catalyst feed tank (31) is transferred via the first part of the first feed line (511) to the second switching system (53) and then via the second part of the first feed line (512) to the valveless piston pump (41) or via the second part of the second feed line (522) to the other valveless piston pump (42). The withdrawn portions from the catalyst feed tank (32) can be transferred via the first part of the second feed line (521) to the second switching system (53) and then via the second part of the second feed line (522) to the valveless piston pump (42) or via the second part of the first feed line (512) to the other valveless piston pump (41). The desired lines can be selected via the switching systems.

In the catalyst feeding system of Figure 5, the fully flush flanged joints connected compact flanges having a bore that is fully flush are depicted with the symbol of a black bowtie the flanged joints are located at the catalyst slurry inlet (s), at the catalyst filling lines both at the catalyst slurry inlets and at the inlets of the catalyst feed tanks, at the outlets of the catalyst feed tanks, at the line flush connections (between the catalyst feed tanks and the pumps), at the line flush outlets, at the catalyst feed pump inlets, at the catalyst feed pump outlets, at the line flush connections (after the catalyst feed pump outlets), at the line flush outlets, at the reactor inlets.

### List of reference signs

(f) and (f') flanges
(a) and (a') faces of the flanges
(a") and (a‴) facing zones
(g) gasket
(i) interruption
(b) bore
(h) and (h') holes
(t) bolt
(s) space
1' catalyst slurry inlet
1 catalyst preparation tank
11 first catalyst preparation tank
12 second catalyst preparation tank
2 catalyst transfer line
21 first catalyst transfer line
211 first part of first catalyst transfer line
212 second part of first catalyst transfer line
22 second catalyst transfer line
221 first part of second catalyst transfer line
222 second part of second catalyst transfer line
23 first switching system
3 catalyst feed tank
31 first catalyst feed tank
32 second catalyst feed tank
4 catalyst feed pump
41 first catalyst feed pump
42 first catalyst feed pump
5 feed line
51 first feed line
511 first part of first feed line
512 second part of first feed line
52 second feed line
521 first part of second feed line
522 second part of second feed line
53 second switching system
6 polymerization reactor
7 reactor feed line
71 first reactor feed line
72 second reactor feed line

## Claims

1. A catalyst feeding system for feeding a catalyst slurry to a polymer production plant, preferably a polyolefin production plant, the catalyst feeding system comprising
a catalyst slurry inlet;
a catalyst slurry outlet configured to be connected to a (pre)polymerization reactor;
one or more component(s) selected from connecting pipes and instruments; and
one or more flanged joints arranged to connect two or more of the catalyst slurry inlet, the catalyst slurry outlet and the one or more component(s) thereby providing fluid communication therebetween,
wherein each of the one or more flanged joints contain a pair of connected flanges, each flange having a face with an inner annular edge encircling a bore; and
wherein in at least one of the flanged joints the faces of the connected flanges are in direct contact with each other at least at the inner annular edges of the flanges thereby providing fully flushed bores when the catalyst system under operation is fed with a catalyst slurry.

2. Catalyst feeding system according to claim 1, wherein in all of the flanged joints used in the catalyst feeding system for connecting pipes the faces of the connected flanges are in direct contact with each other at least at the inner annular edges of the flanges so that the bores are fully flush.

3. Catalyst feeding system according to claim 1 or 2 wherein in all of the flanged joints used in the catalyst feeding system which are in contact with the catalyst slurry when the catalyst system under operation is fed with a catalyst slurry, the faces of the connected flanges are in direct contact with each other at least at the inner annular edges of the flanges thereby providing fully flushed bores.

4. Catalyst feeding system according to any one of the preceding claims wherein in the flanged joints in which the faces of the connected flanges are in direct contact with each other at least at the inner annular edges of the flanges thereby providing fully flushed bores there is a static connection between the pair of connected flanges forming the flanged joint.

5. Catalyst feeding system according to any one of the preceding claims wherein the system comprises at least one flush line pipe wherein said at least one flush line pipe is connected to a further component of the catalyst feeding system by a flanged joint in which the faces of the connected flanges are in direct contact with each other at least at the inner annular edges of the flanges thereby providing fully flushed bores.

6. Catalyst feeding system according to claim 5 wherein the flush line pipe is connected to a connecting pipe.

7. Catalyst feeding system according to any one of the preceding claims wherein the system further comprises a catalyst feeding tank.

8. Catalyst feeding system according to claim 7 wherein the catalyst feeding tank comprises a feeding tank inlet and a feeding tank outlet which each is connected to a connecting pipe of the system by a flanged joint in which the faces of the connected flanges are in direct contact with each other at least at the inner annular edges of the flanges thereby providing fully flushed bores.

9. Catalyst feeding system according to claim 7 or 8, which comprises at least two flush lines, wherein a first flush line is arranged upstream of the feeding tank and a second flush line is arranged downstream of the feeding tank, which each is connected to a connecting pipe of the system by a flanged joint in which the faces of the connected flanges are in direct contact with each other at least at the inner annular edges of the flanges thereby providing fully flushed bores.

10. Catalyst feeding system according to any one of the preceding claims wherein the system further comprises a catalyst slurry pump.

11. Catalyst feeding system according to claim 10 wherein the catalyst slurry pump comprises a slurry pump inlet and a slurry pump outlet which each is connected to a connecting pipe of the system by a flanged joint in which the faces of the connected flanges are in direct contact with each other at least at the inner annular edges of the flanges so that the bores are fully flush.

12. Catalyst feeding system according to claim 10 or 11, which comprises at least two flush lines, wherein a first flush line is arranged upstream of the feeding tank and a second flush line is arranged downstream of the slurry pump, which each is connected to a connecting pipe of the system by a flanged joint in which the faces of the connected flanges are in direct contact with each other at least at the inner annular edges of the flanges thereby providing fully flushed bores.

13. A polymer production plant, preferably a polyolefin production plant comprising a catalyst feeding system according to any one of the preceding claims.

14. A process for producing polymers, in particular polyolefins, comprising feeding a catalyst slurry by use of a catalyst feeding system according to any one of the preceding claims.

15. Use of one or more flanged joints to connect components in a catalyst feeding system of a polymer production plant, preferably a polyolefin production plant, wherein the system comprises a catalyst slurry inlet, a catalyst slurry outlet configured to be connected to a (pre-)polymerization reactor, connecting pipes and instruments, and wherein
one or more flanged joints are arranged to connect two or more of the catalyst slurry inlet, the catalyst slurry outlet and the one or more component(s) thereby providing fluid communication therebetween,
wherein each of the one or more flanged joints contain a pair of connected flanges, each flange having a face with an inner annular edge encircling a bore; and
wherein in at least one of the flanged joints the faces of the connected flanges are in direct contact with each other at least at the inner annular edges of the flanges thereby providing fully flushed bores when the catalyst system under operation is fed with a catalyst slurry.
